# EUROPEAN PATENT APPLICATION

(11) **EP 4 236 455 A1**
(43) Date of publication of application: **30.08.2023**
(21) Application number: 21882144.5
(22) Date of filing: 22.10.2021
(51) Int. Cl.: H04W 36/00, H04W 36/14, H04L 1/18

(54) **DATA TRANSMISSION METHOD, APPARATUS, AND DEVICE**

(30) Priority: 22.10.2020 CN 202011139780
(71) Applicant: Spreadtrum Communications (Shanghai) Co., Ltd., Shanghai 201203 (CN)
(72) Inventor: HAN, Lifeng, Shanghai 201203 (CN)
(74) Representative: Pfenning, Meinig & Partner mbB
(86) International application number: PCT/CN2021/125671
(87) International publication number: WO 2022/083732

(57) **Abstract**

Embodiments of the present application provides a data transmission method and apparatus, and a device. The method includes: acquiring, by a first network device, at least one first packet of a first service, where the at least one first packet is determined based on progress information of sending the first service by the first network device and a second network device, the first network device is a network device accessed by a terminal device before network handover, and the second network device is a network device accessed by the terminal device after the network handover; sending, by the first network device, the at least one first packet to the second network device, where the at least one packet is a packet to be sent by the second network device to the terminal device. Reliability of network handover is improved.

## Description

This application claims the priority to Chinese patent application No. 202011139780.X titled "DATA TRANSMISSION METHOD AND APPARATUS, AND DEVICE" and filed with the China National Intellectual Property Administration on October 22, 2020, the entire content of which is incorporated into this application by reference in its entirety.

### TECHNICAL FIELD

The present invention relates to the field of communication technologies, and in particular to a data transmission method and apparatus, and a device.

### BACKGROUND

A network device can provide a terminal device with a multicast broadcast service (multicast broadcast service, MBS). The MBS service refers to that a network device may multicast or broadcast data to terminal devices.

In a practical application process, a terminal device may be handed over from a cell served by a network device to a cell served by another network device. During the network handover process, the terminal device first disconnects a network connection with a source network device, and then establishes a network connection with a target network device. In this process, downlink packets may be lost, resulting in poor reliability of the network handover.

### SUMMARY

Embodiments of the present application provide a data transmission method and apparatus, and a device, which improve the reliability of network handover.

In a first aspect, an embodiment of the present application provides a data transmission method, including:
acquiring, by a first network device, at least one first packet of a first service, where the at least one first packet is determined based on progress information of sending the first service by the first network device and a second network device, the first network device is a network device accessed by a terminal device before network handover, and the second network device is a network device accessed by the terminal device after the network handover; and
sending, by the first network device, the at least one first packet to the second network device, where the at least one packet is a packet to be sent by the second network device to the terminal device.

In a possible implementation, the at least one first packet includes:
a packet having not been successfully sent by the first network device but having been successfully sent by the second network device before the first network device sends a handover request message to the second network device.

In a possible implementation, the acquiring, by the first network device, the at least one first packet includes:
acquiring, by the first network device, first progress information of sending the first service by the first network device, and second progress information of sending the first service by the second network device;
determining, by the first network device, based on the first progress information and the second progress information, whether to perform data forwarding; and
when the first network device determines to perform data forwarding, acquiring, by the first network device, the at least one first packet based on the first network device based on the first progress information and the second progress information.

In a possible implementation, a transmission mode of the first network device is a radio link control (RLC) acknowledged mode (AM), and a transmission mode of the second network device is the RLC AM;
the first progress information includes at least one of the following: a first identifier or sending status of a packet sent by the first network device, where the first identifier is a maximum identifier of a consecutive packet having been successfully sent by the first network device, and the sending status is sending succeeded or sending failed; and
the second progress information includes: a second identifier, where the second identifier is a maximum identifier of a consecutive packet having been successfully sent by the second network device.

In a possible implementation, the determining, by the first network device, based on the first progress information and the second progress information, whether to perform data forwarding includes:
judging, by the first network device, whether the second identifier is greater than the first identifier;
if yes, determining, by the first network device, to perform data forwarding;
if not, determining, by the first network device, not to perform data forwarding.

In a possible implementation, the at least one first packet includes:
a packet having an identifier within a first identifier range and having not been successfully sent by the first network device, where the first identifier range is: a range greater than the first identifier and less than or equal to the second identifier.

In a possible implementation, a transmission mode of the first network device is an RLC unacknowledged mode (UM), and a transmission mode of the second network device is the RLC UM;
the first progress information includes: a third identifier, where the third identifier is a maximum identifier of a packet having been sent by the first network device; and
the second progress information includes: a fourth identifier, where the fourth identifier is a maximum identifier of a packet having been sent by the second network device, or the fourth identifier is a minimum identifier of a packet in a sending buffer of the second network device.

In a possible implementation, the determining, by the first network device, based on the first progress information and the second progress information, whether to perform data forwarding includes:
judging, by the first network device, whether the fourth identifier is greater than the third identifier;
if yes, determining, by the first network device, to perform data forwarding;
if not, determining, by the first network device, not to perform data forwarding.

In a possible implementation, the at least one first packet includes:
a packet having an identifier within a second identifier range, where the second identifier range is: a range greater than the third identifier and less than the fourth identifier.

In a possible implementation, a transmission mode of the first network device is an RLC UM, and a transmission mode of the second network device is an RLC AM;
the first progress information includes: a third identifier, where the third identifier is a maximum identifier of a packet having been sent by the first network device; and
the second progress information includes: a second identifier, where the second identifier is a maximum identifier of a consecutive packet having been successfully sent by the second network device.

In a possible implementation, the determining, by the first network device, whether to perform data forwarding based on the first progress information and the second progress information includes:
judging, by the first network device, whether the second identifier is greater than the third identifier;
if yes, determining, by the first network device, to perform data forwarding;
if not, determining, by the first network device, not to perform data forwarding.

In a possible implementation, the at least one first packet includes:
a packet having an identifier within a third identifier range, where the third identifier range is: a range greater than the third identifier and less than or equal to the second identifier.

In a possible implementation, a transmission mode of the first network device is an RLC AM, and a transmission mode of the second network device is an RLC UM;
the first progress information includes at least one of the following: a first identifier or sending status of a packet having been sent by the first network device, where the first identifier is a maximum identifier of a consecutive packet having been successfully sent by the first network device, and the sending status is sending succeeded or sending failed; and
the second progress information includes: a fourth identifier, where the fourth identifier is a maximum identifier of a packet having been sent by the second network device, or the fourth identifier is a minimum identifier of a packet in a sending buffer of the second network device.

In a possible implementation, the determining, by the first network device, based on the first progress information and the second progress information, whether to perform data forwarding includes:
judging, by the first network device, whether the fourth identifier is greater than the first identifier;
if yes, determining, by the first network device, to perform data forwarding;
if not, determining, by the first network device, not to perform data forwarding.

In a possible implementation, the at least one first packet includes:
a packet having an identifier within a fourth identifier range and having not been successfully sent by the first network device, where the fourth identifier range is: a range greater than the first identifier and less than the fourth identifier.

In a possible implementation, the acquiring, by the first network device, the at least one first packet includes:
receiving, by the first network device, an identifier of the at least one first packet sent by the second network device; and
acquiring, by the first network device, the at least one first packet based on the identifier of the at least one first packet.

In a second aspect, an embodiment of the present application provides a data transmission method, including:
receiving, by a second network device, at least one first packet sent by a first network device, where the at least one first packet is determined based on progress information of sending a first service by the first network device and the second network device, the first network device is a network device accessed by a terminal device before network handover, and the second network device is a network device accessed by the terminal device after the network handover; and
sending, by the second network device, the at least one first packet to the terminal device.

In a possible implementation, the first packet includes:
a packet having not been successfully sent by the first network device but having been successfully sent by the second network device before the first network device sends a handover request message to the second network device.

In a possible implementation, before the receiving, by the second network device, the at least one first packet sent by the first network device, the method further includes:
acquiring, by the second network device, first progress information of sending the first service by the first network device, and second progress information of sending the first service by the second network device; and
determining, by the second network device, based on the first progress information and the second progress information, to perform data forwarding.

In a possible implementation,

In a possible implementation, a transmission mode of the first network device is a radio link control (RLC) acknowledged mode (AM), and a transmission mode of the second network device is the RLC AM;
the first progress information includes at least one of the following: a first identifier or sending status of a packet having been sent by the first network device, where the first identifier is a maximum identifier of a consecutive packet having been successfully sent by the first network device, and the sending status is sending succeeded or sending failed; and
the second progress information includes: a second identifier, where the second identifier is a maximum identifier of a consecutive packet having been successfully sent by the second network device.

In a possible implementation, the determining, by the second network device, based on the first progress information and the second progress information, to perform data forwarding includes:
judging, by the second network device, whether the second identifier is greater than the first identifier;
if yes, determining, by the second network device, to perform data forwarding.

In a possible implementation, the at least one first packet includes:
a packet having an identifier within a first identifier range and having not been successfully sent by the first network device, where the first identifier range is: a range greater than the first identifier and less than or equal to the second identifier.

In a possible implementation, a transmission mode of the first network device is an RLC unacknowledged mode (UM), and a transmission mode of the second network device is an RLC UM;
the first progress information includes: a third identifier, where the third identifier is a maximum identifier of a packet having been sent by the first network device; and
the second progress information includes: a fourth identifier, where the fourth identifier is a maximum identifier of a packet having been sent by the second network device, or the fourth identifier is a minimum identifier of a packet in a sending buffer of the second network device.

In a possible implementation, the determining, by the second network device, based on the first progress information and the second progress information, to perform data forwarding includes:
judging, by the second network device, whether the fourth identifier is greater than the third identifier;
if yes, determining, by the second network device, to perform data forwarding.

In a possible implementation, the at least one first packet includes:
a packet having an identifier within a second identifier range, where the second identifier range is: a range greater than the third identifier and less than the fourth identifier.

In a possible implementation, a transmission mode of the first network device is an RLC UM, and a transmission mode of the second network device is an RLC AM;
the first progress information includes: a third identifier, where the third identifier is a maximum identifier of a packet having been sent by the first network device; and
the second progress information includes: a second identifier, where the second identifier is a maximum identifier of a consecutive packet having been successfully sent by the second network device.

In a possible implementation, the determining, by the second network device, based on the first progress information and the second progress information, to perform data forwarding includes:
judging, by the second network device, whether the second identifier is greater than the third identifier;
if yes, determining, by the second network device, to perform data forwarding.

In a possible implementation, the at least one first packet includes:
a packet having an identifier within a third identifier range, where the third identifier range is: a range greater than the third identifier and less than or equal to the second identifier.

In a possible implementation, a transmission mode of the first network device is an RLC AM, and a transmission mode of the second network device is an RLC UM;
the first progress information includes at least one of the following: a first identifier, or sending status of a packet having been sent by the first network device, where the first identifier is a maximum identifier of a consecutive packet having been successfully sent by the first network device, and the sending status is sending succeeded or sending failed; and
the second progress information includes: a fourth identifier, where the fourth identifier is a maximum identifier of a packet having been sent by the second network device, or the fourth identifier is a minimum identifier of a packet in a sending buffer of the second network device.

In a possible implementation, the determining, by the second network device, based on the first progress information and the second progress information, to perform data forwarding includes:
judging, by the second network device, whether the fourth identifier is greater than the first identifier;
if yes, determining, by the second network device, to perform data forwarding.

In a possible implementation, the at least one first packet includes:
a packet having an identifier within a fourth identifier range and having not been successfully sent by the first network device, where the fourth identifier range is: a range greater than the first identifier and 1 than the fourth identifier.

In a possible implementation, the second network device is a multicast/ broadcast radio bearer (MRB); the sending, by the second network device, the at least one first packet to the terminal device includes:
sending, by the second network device, the at least one first packet to the terminal device through a unicast radio bearer (DRB) corresponding to the MRB; or,
sending, by the second network device, the at least one first packet to the terminal device through a temporary transmission resource of the MRB.

In a third aspect, an embodiment of the present application provides a data transmission apparatus, including a processing module and a sending module, where,
the processing module is configured to acquire at least one first packet of a first service, where the at least one first packet is determined based on progress information of sending the first service by a first network device and a second network device, the first network device is a network device accessed by a terminal device before network handover, and the second network device is a network device accessed by the terminal device after the network handover; and
the sending module is configured to send the at least one first packet to the second network device, where the at least one packet is a packet to be sent by the second network device to the terminal device.

In a possible implementation, the at least one first packet includes:
a packet having not been successfully sent by the first network device but having been successfully sent by the second network device before the first network device sends a handover request message to the second network device.

In a possible implementation, the processing module is specifically configured to:
acquire first progress information of sending the first service by the first network device, and second progress information of sending the first service by the second network device;
determine whether to perform data forwarding based on the first progress information and the second progress information; and
when it is determined to perform data forwarding, acquire the at least one first packet based on the first network device based on the first progress information and the second progress information.

In a possible implementation, a transmission mode of the first network device is a radio link control (RLC) acknowledged mode (AM), and a transmission mode of the second network device is the RLC AM;
the first progress information includes at least one of the following: a first identifier or sending status of a packet having been sent by the first network device, where the first identifier is a maximum identifier of a consecutive packet having been successfully sent by the first network device, and the sending status is sending succeeded or sending failed; and
the second progress information includes: a second identifier, where the second identifier is a maximum identifier of a consecutive packet having been successfully sent by the second network device.

In a possible implementation, the processing module is specifically configured to:
judge whether the second identifier is greater than the first identifier;
if yes, determine to perform data forwarding;
if not, determine not to perform data forwarding.

In a possible implementation, the at least one first packet includes:
a packet having an identifier within a first identifier range and having not been successfully sent by the first network device, where the first identifier range is: a range greater than the first identifier and less than or equal to the second identifier.

In a possible implementation, a transmission mode of the first network device is an RLC unacknowledged mode (UM), and a transmission mode of the second network device is the RLC UM;
the first progress information includes: a third identifier, where the third identifier is a maximum identifier of a packet having been sent by the first network device; and
the second progress information includes: a fourth identifier, where the fourth identifier is a maximum identifier of a packet having been sent by the second network device, or the fourth identifier is a minimum identifier of a packet in a sending buffer of the second network device.

In a possible implementation, the processing module is specifically configured to:
judge whether the fourth identifier is greater than the third identifier;
if yes, determine to perform data forwarding;
if not, determine not to perform data forwarding.

In a possible implementation, the at least one first packet includes:
a packet having an identifier within a second identification range, where the second identification range is: a range greater than the third identification and less than the fourth identification.

In a possible implementation, a transmission mode of the first network device is an RLC UM, and a transmission mode of the second network device is an RLC AM;
the first progress information includes: a third identifier, where the third identifier is a maximum identifier of a packet having been sent by the first network device; and
the second progress information includes: a second identifier, where the second identifier is a maximum identifier of a consecutive packet having been successfully sent by the second network device.

In a possible implementation, the processing module is specifically configured to:
judge whether the second identifier is greater than the third identifier;
if yes, determine to perform data forwarding;
if not, determine not to perform data forwarding.

In a possible implementation, the at least one first packet includes:
a packet having an identifier within a third identifier range, where the third identifier range is: a range greater than the third identifier and less than or equal to the second identifier.

In a possible implementation, a transmission mode of the first network device is an RLC AM, and a transmission mode of the second network device is an RLC UM;
the first progress information includes at least one of the following: a first identifier or sending status of a packet having been sent by the first network device, where the first identifier is a maximum identifier of a consecutive packet having been successfully sent by the first network device, and the sending status is sending succeeded or sending failed; and
the second progress information includes: a fourth identifier, where the fourth identifier is a maximum identifier of a packet having been sent by the second network device, or the fourth identifier is a minimum identifier of a packet in a sending buffer of the second network device.

In a possible implementation, the processing module is specifically configured to:
judge whether the fourth identifier is greater than the first identifier;
if yes, determine to perform data forwarding;
if not, determine not to perform data forwarding.

In a possible implementation, the at least one first packet includes:
a packet having an identifier within a fourth identifier range and having not been successfully sent by the first network device, where the fourth identifier range is: a range greater than the first identifier and less than the fourth identifier.

In a possible implementation, the apparatus further includes a receiving module, where,
the receiving module is configured to receive an identifier of the at least one first packet sent by the second network device; and
the processing module is specifically configured to acquire the at least one first packet based on the identifier of the at least one first packet.

In a fourth aspect, an embodiment of the present application provides a data transmission apparatus, including: a receiving module and a sending module, where,
the receiving module is configured to receive at least one first packet sent by a first network device, where the at least one first packet is determined based on progress information of sending a first service by the first network device and a second network device, the first network device is a network device accessed by a terminal device before network handover, and the second network device is a network device accessed by the terminal device after the network handover; and
the sending module is configured to send the at least one first packet to the terminal device.

In a possible implementation, the first packet includes:
a packet having not been successfully sent by the first network device but having been successfully sent by the second network device before the first network device sends a handover request message to the second network device.

In a possible implementation, the device further includes a processing module, where the processing module is configured to:
before the receiving module receives the at least one first packet sent by the first network device, acquire first progress information of sending the first service by the first network device, and second progress information of sending the first service by the second network device;
determine to perform data forwarding based on the first progress information and the second progress information;

In a possible implementation, a transmission mode of the first network device is a radio link control (RLC) acknowledged mode (AM), and a transmission mode of the second network device is the RLC AM;
the first progress information includes at least one of the following: a first identifier or sending status of a packet having been sent by the first network device, where the first identifier is a maximum identifier of a consecutive packet having been successfully sent by the first network device, and the sending status is sending succeeded or sending failed; and
the second progress information includes: a second identifier, where the second identifier is a maximum identifier of a consecutive packet having been successfully sent by the second network device.

In a possible implementation, the processing module is configured to:
judge whether the second identifier is greater than the first identifier;
if yes, determine to perform data forwarding.

In a possible implementation, the at least one first packet includes:
a packet having an identifier within a first identifier range and having not been successfully sent by the first network device, where the first identifier range is: a range greater than the first identifier and less than or equal to the second identifier.

In a possible implementation, a transmission mode of the first network device is an RLC unacknowledged mode (UM), and a transmission mode of the second network device is the RLC UM;
the first progress information includes: a third identifier, where the third identifier is a maximum identifier of a packet having been sent by the first network device; and
the second progress information includes: a fourth identifier, where the fourth identifier is a maximum identifier of a packet having been sent by the second network device, or the fourth identifier is a minimum identifier of a packet in a sending buffer of the second network device.

In a possible implementation, the processing module is specifically configured to:
judge whether the fourth identifier is greater than the third identifier;
if yes, determine to perform data forwarding.

In a possible implementation, the at least one first packet includes:
a packet having an identifier within a second identifier range, where the second identifier range is: a range greater than the third identifier and less than the fourth identifier.

In a possible implementation, a transmission mode of the first network device is an RLC UM, and a transmission mode of the second network device is an RLC AM;
the first progress information includes: a third identifier, where the third identifier is a maximum identifier of a packet having been sent by the first network device; and
the second progress information includes: a second identifier, where the second identifier is a maximum identifier of a consecutive packet having been successfully sent by the second network device.

In a possible implementation, the processing module is specifically configured to:
judge whether the second identifier is greater than the third identifier;
if yes, determine to perform data forwarding.

In a possible implementation, the at least one first packet includes:
a packet having an identifier within a third identifier range, where the third identifier range is: a range greater than the third identifier and less than or equal to the second identifier.

In a possible implementation, a transmission mode of the first network device is an RLC AM, and a transmission mode of the second network device is an RLC UM;
the first progress information includes at least one of the following: a first identifier or sending status of a packet having been sent by the first network device, where the first identifier is a maximum identifier of a consecutive packet having been successfully sent by the first network device, and the sending status is sending succeeded or sending failed; and
the second progress information includes: a fourth identifier, where the fourth identifier is a maximum identifier of a packet having been sent by the second network device, or the fourth identifier is a minimum identifier of a packet in a sending buffer of the second network device.

In a possible implementation, the processing module is specifically configured to:
judge whether the fourth identifier is greater than the first identifier;
if yes, determine to perform data forwarding.

In a possible implementation, the at least one first packet includes:
a packet having an identifier within a fourth identifier range and having not been successfully sent by the first network device, where the fourth identifier range is:
a range greater than the first identifier and less than the fourth identifier.

In a possible implementation, the second network device is a multicast broadcast radio bearer (MRB); the sending module is specifically configured to:
send the at least one first packet to the terminal device through a unicast radio bearer (DRB) corresponding to the MRB; or,
send the at least one first packet to the terminal device through a temporary transmission resource of the MRB.

In a fifth aspect, an embodiment of the present application provides a network device, including: a transceiver, a processor, and a memory;
where the memory stores a computer-executable instruction; and
the processor executes the computer-executable instruction stored in the memory to cause the processor to execute the data processing method according to any one of the first aspect.

In a sixth aspect, an embodiment of the present application provides a network device, including: a transceiver, a processor, and a memory;
where the memory stores a computer-executable instruction;
the processor executes the computer-executable instruction stored in the memory to cause the processor to execute the data processing method according to any one of the second aspect.

In a seventh aspect, an embodiment of the present application provides a computer-readable storage medium, where the computer-readable storage medium has a computer-executable instruction stored thereon, and the computer-executable instruction, when executed by a processor, is used to implement the data processing method according to any one of the first aspect.

In an eighth aspect, an embodiment of the present application provides a computer-readable storage medium, where the computer-readable storage medium has a computer-executable instruction stored thereon, and the computer-executable instruction, when executed by a processor, is used to implement the data processing method according to any one of the second aspect.

In a ninth aspect, an embodiment of the present application provides a computer program product, that, when executed by a processor, implements the data processing method according to any one of the first aspect.

In a tenth aspect, an embodiment of the present application provides a computer program product, that, when executed by a processor, implements the data processing method according to any one of the second aspect.

In the data processing method and apparatus, and the device provided by the embodiment of the present application, during the network handover of the terminal device, the first network device can determine at least one first packet that may be lost during the network handover process, where the at least one first packet is determined based on progress information of sending a first service by the first network device and the second network device, and the first network device sends the at least one first packet to the second network device, so that the second network device sends the at least one first packet to the terminal, thereby reducing packet loss, and improving the reliability of network handover.

### BRIEF DESCRIPTION OF DRAWINGS

FIG. 1 is a schematic diagram of a sending buffer provided by an embodiment of the present application.
FIG. 2 is an architecture diagram of a communication system provided by an embodiment of the present application.
FIG. 3 is a schematic flowchart of a network handover method provided by an embodiment of the present application.
FIG. 4 is a schematic flowchart of a data transmission method provided by an embodiment of the present application.
FIG. 5 is a schematic flowchart of another data transmission method provided by an embodiment of the present application.
FIG. 6 is a schematic flowchart of still another data transmission method provided by an embodiment of the present application.
FIG. 7 is a schematic diagram of a type of data transmission provided by an embodiment of the present application.
FIG. 8 is a schematic diagram of another type of data transmission provided by an embodiment of the present application.
FIG. 9 is a schematic diagram of still another type of data transmission provided by an embodiment of the present application.
FIG. 10 is a schematic diagram of yet another type of data transmission provided by an embodiment of the present application.
FIG. 11 is a schematic structural diagram of a data transmission apparatus provided by an embodiment of the present application.
FIG. 12 is a schematic structural diagram of another data transmission apparatus provided by an embodiment of the present application.
FIG. 13 is a schematic structural diagram of still another data transmission apparatus provided by an embodiment of the present application.
FIG. 14 is a schematic structural diagram of yet another data transmission apparatus provided by an embodiment of the present application.
FIG. 15 is a schematic structural diagram of a network device provided by an embodiment of the present application.

### DESCRIPTION OF EMBODIMENTS

For ease of understanding, a concept involved in the embodiments of the present application will be described first.

A network device: is a device with a wireless transceiver function. The network device includes but is not limited to: an evolutional base station (Evolutional Node B, eNB or eNodeB) in long term evolution (long term evolution, LTE), a base station (gNodeB or gNB) or TRP in new radio (new radio, NR), a base station in a subsequent evolved system, an access node in a wireless fidelity (wireless fidelity, WiFi) system, a wireless relay node, a wireless backhaul node, etc. The base station may be: a macro base station, a micro base station, a pico base station, a small station, a relay station, or a balloon station, etc. Multiple base stations may support the aforementioned networks of the same technology, or may support the aforementioned networks of different technologies. The base station may include one or more co-sited or non-co-sited transmission receiving point (transmission receiving point, TRP).

A terminal device: is a device with a wireless transceiver function. The terminal device may be deployed on land, including indoors or outdoors, handheld, wearable or vehicle-mounted, the terminal device may also be deployed on water (such as on a ship), and the terminal may also be deployed in the air (such as on an aircraft, a balloon or a satellite). The terminal device may be a mobile phone, a tablet computer (Pad), a computer with a wireless transceiver function, a virtual reality (virtual reality, VR) terminal device, an augmented reality (augmented reality, AR) terminal device, an wireless terminal in industrial control (industrial control), a vehicle-mounted terminal device, a wireless terminal in self driving, a wireless terminal device in remote medical (remote medical), a wireless terminal device in smart grid (smart grid), a wireless terminal device in transportation safety (transportation safety), a wireless terminal device in smart city (smart city), a wireless terminal device in smart home (smart home), a wearable terminal device, etc. The terminal device involved in the embodiments of the present application may also be referred to as a terminal, a user equipment (user equipment, UE), an access terminal device, a vehicle-mounted terminal, an industrial control terminal, a UE unit, a UE station, a mobile station, a mobile termination, a remote station, a remote terminal device, a mobile device, a UE terminal device, a wireless communication device, a UE agent or a UE apparatus, etc. The terminal device may be fixed or mobile.

An acknowledged mode (acknowledged mode, AK): after the terminal device receives a packet sent by the network device, the terminal device sends a success response (or acknowledgement information) to the network device to indicate that the terminal device has successfully received the packet. In this mode, the network device can determine which packet has been successfully received by the terminal device and which packet has not been received.

An unacknowledged mode (unacknowledged mode, UK): after the terminal device receives a packet sent by the network device, the terminal device does not send a success response to the network device. In this mode, the network device cannot determine which packet has been successfully received by the terminal device and which packet has not been received.

A sending buffer: after the network device sends a packet to the terminal device, the network device stores the packet in the sending buffer, and if the network device receives from the terminal device a success response, which indicates that the terminal device has successfully received the packet, the network device deletes the packet in the sending buffer.

An identifier of a packet: the identifier of a packet refers to an identifier that can identify the packet, which may be a serial number or a count value of a certain protocol layer packet, for example, a serial number or a count value of a packet data convergence protocol (packet data convergence protocol, PDCP) protocol layer.

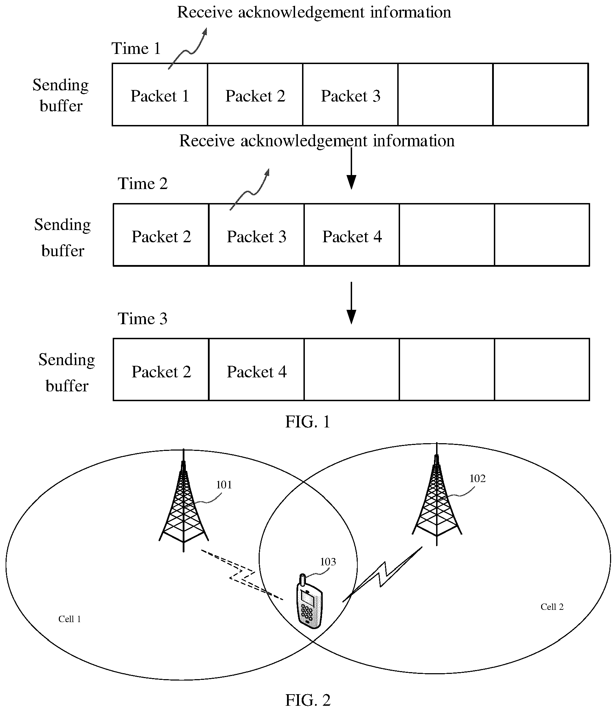

With reference to FIG. 1, the sending buffer will be described below.

FIG. 1 is a schematic diagram of a sending buffer provided by an embodiment of the present application. Referred to FIG. 1, it is assumed that a maximum of 5 packets can be stored in the sending buffer for the terminal device. Before time 1, it is assumed that packet 1, packet 2 and packet 3 are stored in the sending buffer for the terminal device. At the time 1, it is assumed that the network device has received the success response corresponding to the packet 1 sent by the terminal device, and the network device has sent packet 4, then the terminal device deletes the packet 1 in the sending buffer and stores the packet 4 in the sending buffer. At this time, the sending buffer includes the packet 2, the packet 3 and the packet 4. At time 2, it is assumed that the network device has received a success response corresponding to the packet 3 sent by the terminal device, the terminal device deletes the packet 3 in the sending buffer. At this time, the sending buffer includes the packet 2 and the packet 4.

It should be noted that, in the unacknowledged mode, the sending buffer stores the latest N packets sent by the network device, where N is a maximum number of packets that can be stored in the sending buffer. For example, if N is 5, the sending buffer stores the latest 5 packets sent by the network device.

Next, with reference to FIG. 2, a communication system to which the embodiment of the present application is applied will be described.

FIG. 2 is an architecture diagram of a communication system provided by an embodiment of the present application. Please refer to FIG. 2, a network device 201, a network device 202 and a terminal device 203 are included. A cell served by the network device 201 is cell 1, and a cell served by the network device 202 is cell 2. In a practical application process, the network device 201 may be handed over from the cell 1 to the cell 2.

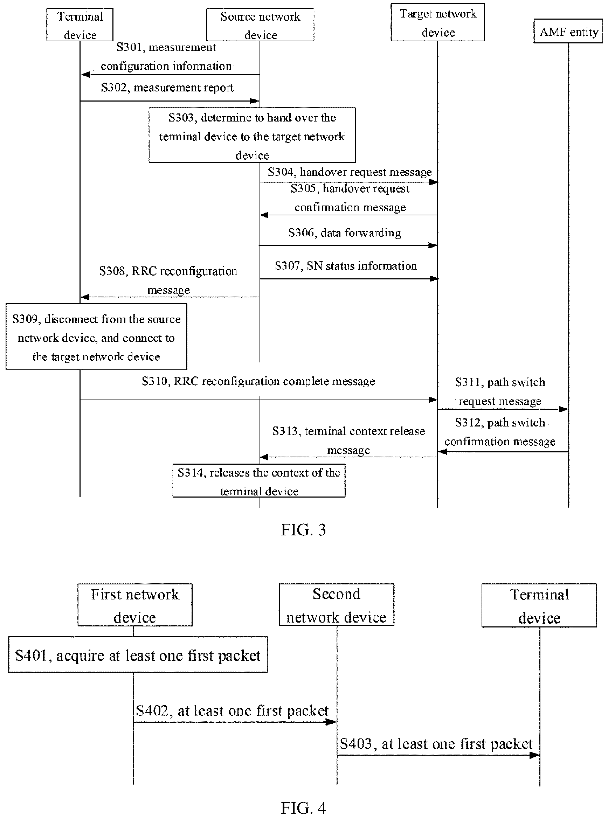

For ease of understanding, a network handover procedure of a terminal device will be described below with reference to FIG. 3.

FIG. 3 is a schematic flowchart of a network handover method provided by an embodiment of the present application. Please refer to FIG. 3, the method may include:

S301, a source network device sends measurement configuration information to a terminal device.

The measurement configuration information may include at least one measurement event, where the at least one measurement event refers to an event to be measured by the terminal device.

For example, the measurement event may include event A3, event A5, and so on. The event A3 refers to that signal quality of a neighboring cell is higher than signal quality of a serving cell by a certain threshold. The event A5 refers to that signal quality of a serving cell is less than a threshold 1, and signal quality of a neighboring cell is greater than a threshold 2.

S302, the terminal device sends a measurement report to the source network device.

The terminal device may perform cell measurement to obtain the measurement report, and then send the measurement report to the source network device.

The terminal device may periodically send the measurement report to the source network device, or the terminal device may send the measurement report to the source network device when a measurement event is satisfied. For example, it is assumed that the measurement event includes the event A3, then when the terminal device obtains, through measurement, that the signal quality of the neighboring cell is higher than the signal quality of the serving cell by a certain threshold, the terminal device sends the measurement report to the source network device. For example, it is assumed that the measurement event includes the event A5, then when the terminal device obtains, through measurement, that the signal quality of the serving cell is less than the threshold 1 and the signal quality of the neighboring cell is greater than the threshold 2, the terminal device sends the measurement report to the source network device.

S303, the source network device determines to hand over the terminal device to the target network device.

The source network device may determine to hand over the terminal device to the target network device based on the measurement report and radio resource management (radio resource management, RRM).

S304, the source network device sends a handover request message to the target network device.

The handover request message is used to request handing over the terminal device to the target network device, and the handover request message may include information such as context of the terminal device.

S305, the target network device sends a handover request acknowledge message to the source network device.

The handover request acknowledge message is used to indicate that the target network device agrees to hand over the terminal device to the target network device. The handover request handover message may also include: resource configuration information for the terminal device to perform random access in a target cell served by the target network device.

S306, the source network device performs data forwarding (data forwarding) to the target network device.

The source network device may determine at least one packet according to the method shown in the embodiment of the present application, and send the at least one packet to the target network device. For the specific process, reference can be made to the following embodiments, which will not be detailed here.

S307, the source network device sends sequence number (sequence number, SN) status (status) information to the target network device.

SN status may indicate which packet has been sent by the source network device to the terminal device.

S308, the source network device sends a radio resource control (Radio Resource Control, RRC) reconfiguration (reconfiguration) message to the terminal device.

The RRC reconfiguration (RRC reconfiguration) message includes handover command information.

S309, the terminal device disconnects from the source network device, and connects to the target network device.

S310, the terminal device sends an RRC reconfiguration complete (RRC reconfiguration complete) message to the target network device.

S311, the target network device sends a path switch request message to an access and mobility function (access and mobility function, AMF) entity.

S312, the AMF entity sends a path switch confirmation message to the target network device.

S313, the target network device sends a terminal context release message to the source network device.

S314, the source network device releases the context of the terminal device.

In related technologies, before the terminal device 203 is handed over from the cell 1 to the cell 2, a radio connection is established between the terminal device 203 and the network device 201, and during the network handover process, the terminal device 203 disconnects from the network device 201, and establishes a connection with the network device 202. The network device 201 and the network device 202 can provide an MBS service at the same time, that is, the network device 201 and the network device 202 can simultaneously broadcast or multicast packets of a certain service to terminal devices in their cells. The progress of sending the packets by the network device 201 and the network device 202 may be different. If the progress of sending the packets by the network device 201 is greater than the progress of sending the packet by the network device 201, then after the terminal device is handed over from the cell 1 to the cell 2, the terminal device may not be able to receive some packets of the service. For example, when the network device 201 sends the 20th packet, the network device 202 may have already sent the 28th packet, and then, after the terminal device is handed over from the cell 1 to the cell 2, the terminal device may not be able to receive the 21st to 27th packets, or the terminal device may not be able to receive more packets. It can be seen from the above that during the network handover process, downlink packet loss may occur, resulting in poor reliability of the network handover.

In the embodiment of the present application, in order to solve the above technical problem, during the network handover of the terminal device (for example, in steps S304-S306 in the embodiment of FIG. 3), the first network device (the source network device) can determine a packet that may be lost during the network handover, and send the packet that may be lost to the second network device (the target network device), so that the second network device sends the packet that may be lost to the terminal device again, thereby reducing packet loss, and thereby improving the reliability of network handover.

The technical solutions of the embodiments of the present application are illustrated in detail below by specific embodiments. It should be noted that, the following embodiments may exist independently or be combined with each other. The same or similar content will not be repeated in different embodiments.

FIG. 4 is a schematic flowchart of a data transmission method provided by an embodiment of the present application. Please refer to FIG. 4, the method may include:
S401, a first network device acquires at least one first packet.

In the embodiments involved in the present application, the first network device is the network device currently accessed by the terminal device, and the second network device is the network device to which the terminal device is handed over. That is, the first network device is the network device accessed by the terminal device before network handover, and may also be called a source network device; and the second network device is the network device accessed by the terminal device after network handover, and may also be called a target network device.

During the network handover process shown in FIG. 3, the embodiment shown in FIG. 4 may be executed in the step shown in S306.

The at least one first packet is a packet in the first service, and both the first network device and the second network device can send the packet in the first service. For example, the first network device multicast or broadcast packets in the first service to terminal devices in a cell it serves, and the second network device may multicast or broadcast the packets in the first service to terminal devices in a cell it serves. The progress of sending the packets by the first network device and the second network device may be different.

The at least one packet is a packet that the terminal device may lose during the network handover (handover from the first network device to the second network device). In other words, the at least one packet is a packet whose loss probability is greater than a preset threshold during the network handover process of the terminal device, where a lost packet refers to a packet that cannot be received by the terminal device. The at least one first packet is determined based on progress information of sending the first service by the first network device and the second network device. The transmission modes of the source network device and the target network device may be AM mode or UM mode. When the transmission modes of the source network device and the target network device are different, a process for the first network device to acquire the at least one first packet is also different, which will be described in the embodiments below, and will not be detailed here.

Optionally, the at least one first packet includes: a packet having not been successfully sent by the first network device but having been successfully sent by the second network device before the first network device sends a handover request message to the second network device. During the handover process, if the first network device fails to send a packet, the terminal device cannot successfully receive the packet from the first network device, and if the second network device has already successfully sent the packet, after the terminal device is handed over to the second network device, the second network device would not send the packet, so the terminal device cannot successfully receive the packet from the second network device. Therefore, during the network handover process, if the first network device has not sent a certain packet successfully, and the second network device has successfully sent the packet, then the terminal device cannot successfully receive the packet, resulting in loss of the packet. When the transmission modes (AM or UM) of the source network device and the target network device are different, contents included in the at least one first packet is different, which will be described in the embodiments below, and will not be detailed here.

It should be noted that a packet having not been unsuccessfully sent includes: a packet having been sent but not successfully sent, and/or a packet having not been sent.

S402, the first network device sends the at least one first packet to the second network device.

S403, the second network device sends the at least one first packet to the terminal device.

After the terminal device accesses the second network device, the second network device sends the at least one first packet to the terminal device.

The second network device may send the at least one first packet to the terminal device in the following two ways:

### A first implementation:

If the target network device is a multicast broadcast radio bearer (MBS point to multipoint radio bearer, MRB), the target network device configures a unicast data radio bearer (data radio bearer, DRB) corresponding to the MRB for the terminal device, and sends the at least one first packet to the terminal device through the DRB. After the target network device completes sending the at least one first packet to the terminal device through the DRB, the target network device stops data transmission on the DRB.

In this manner, the target network device may carry configuration information of the DRB and the MRB of the target network device (corresponding to the MRB of the source network device) in the handover request acknowledge message.

### A second implementation:

If the target network device is an MRB, the target network device may configure a dedicated MRB temporary transmission resource for the terminal device, and send the at least one first packet to the terminal device through the dedicated MRB temporary transmission resource. For example, the target network device may configure an additional physical downlink shared channel (physical downlink shared channel, PDSCH) resource, and send the at least one first packet to the terminal device through the PDSCH resource. The target network device may indicate a location of the PDSCH resource in a multicast control channel (multicast control channel, MCCH), so that the terminal receives the at least one first packet at the location of the PDSCH resource.

In the embodiment of the present application, during the network handover of the terminal device, the first network device can determine at least one first packet that may be lost during the network handover process, where the at least one first packet is determined based on progress information of sending a first service by the first network device and the second network device, and the first network device sends the at least one first packet to the second network device, so that the second network device sends the at least one first packet to the terminal, thereby reducing packet loss, and improving the reliability of network handover.

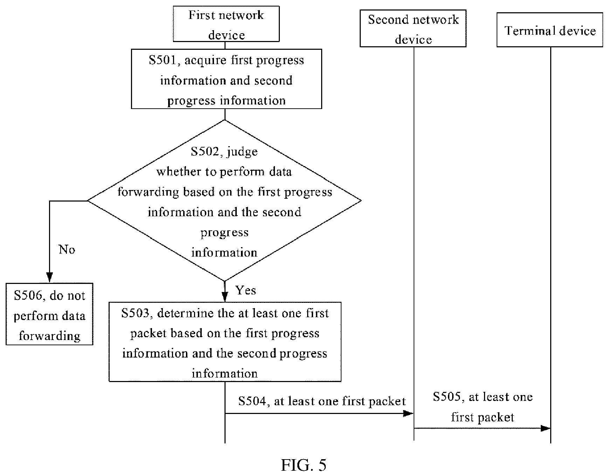

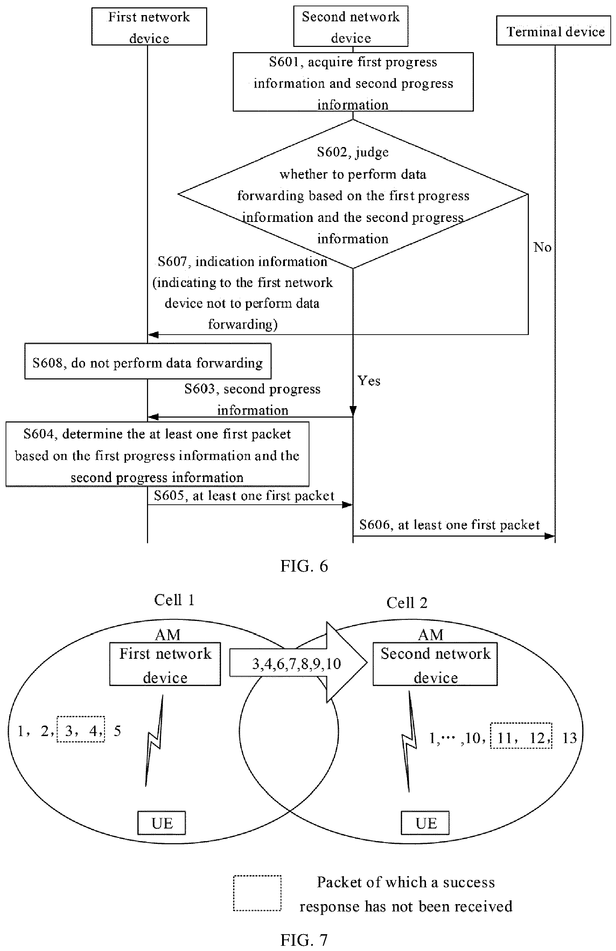

On the basis of any one of the above embodiments, the first network device may determine the at least one first packet based on the progress of sending the first service by the first network device and the second network device, or the second network device may determine an identifier of the at least one first packet based on the progress of sending the first service by the first network device and the second network device, and send the identifier of the at least one first packet to the first network device, so that the first network device determines the at least one first packet based on the identifier of the at least one first packet. In the following, the two possible implementations will be described respectively through the embodiments shown in FIG. 5 and FIG. 6.

FIG. 5 is a schematic flowchart of another data transmission method provided by an embodiment of the present application. Please refer to FIG. 5, the method may include:
S501, the first network device acquires first progress information of sending the first service by the first network device, and second progress information of sending the first service by the second network device.

The first progress information is used to indicate a progress at which the first network device sends packets in the first service. For example, the first progress information may indicate which packet in the first service is successfully sent by the first network device, and may also indicate which packet in the first service is not successfully sent. When the transmission modes (AM or UM) of the first network device and the second network device are different, the content included in the first progress information is different, which will be described in the embodiments below, and will not be detailed here.

The second progress information is used to indicate a progress at which the second network device sends packets in the first service. For example, the second progress information may indicate which packet in the first service is successfully sent by the second network device, and may also indicate which packet in the first service is not successfully sent. When the transmission modes (AM or UM) of the first network device and the second network device are different, the content included in the second progress information is different, which will be described in the embodiments below, and will not be detailed here.

When the second network device sends the handover request acknowledge message to the first network device, the second progress information may be carried in the handover request acknowledge message, so that the first network device acquires the second progress information in the handover request acknowledge message.

S502, the first network device judges, based on the first progress information and the second progress information, whether to perform data forwarding.

If yes, execute S503-S505.

If not, execute S506.

The first network device judges whether the transmission progress of the first service by the second network device is greater than the transmission progress of the first service by the first network device based on the first progress information and the second progress information. If yes, it is determined to perform data forwarding. If not, it is determined not to perform the data forwarding.

Alternatively, the first network device may judge whether packet loss will occur after the terminal device is handed over from the first network device to the second network device based on the first progress information and the second progress information. If yes, it is determined to perform data forwarding. If not, it is determined not to perform the data forwarding.

S503, the first network device determines the at least one first packet based on the first progress information and the second progress information.

When the transmission modes (AM or UM) of the source network device and the target network device are different, the process of the determination of the at least one first packet by the first network device based on the first progress information and the second progress information is different, and the content included in the at least one first packet is different, which will be described in the embodiments below, and will not be detailed here.

S504, the first network device sends the at least one first packet to the second network device.

S505, the second network device sends the at least one first packet to the terminal device.

It should be noted that, for the execution process of S505, reference can be made to the execution process of S403, which will not be repeated here.

S506, the first network device does not perform data forwarding.

Optionally, if the first network device does not perform data forwarding, the first network device may execute S307 in the embodiment of FIG. 3.

In the embodiment shown in FIG. 5, the first network device may determine whether data forwarding is required based on the progress information of sending the first service by the first network device and the second network device. When it is determined that data forwarding is required, the first network device may determine the at least one first packet that may be lost during the network handover process based on the progress information of sending the first service by the first network device and the second network device, and send the at least one first packet to the second network device packet, so that after the terminal device is handed over to the second network device, the second network device can send the at least one first packet to the terminal device, so as to reduce packet loss during the network handover process, thereby improving the reliability of network handover.

FIG. 6 is a schematic flowchart of still another data transmission method provided by an embodiment of the present application. Please refer to FIG. 6, the method may include:
S601, the second network device acquires first progress information of sending the first service by the first network device, and second progress information of sending the first service by the second network device.

For the related description of the first progress information and the second progress information, reference can be made to S501, which will not be repeated here.

When the first network device sends a handover request message to the second network device, the first progress information may be carried in the handover request message, so that the second network device may acquire the first progress information in the handover request message.

S602, the second network device determines whether to perform data forwarding based on the first progress information and the second progress information.

If yes, execute S603-S606.

If not, execute S607-S608.

It should be noted that, for the execution process of S602, reference can be made to the execution process of S601, which will not be repeated here.

S603, the second network device sends second progress information to the first network device.

Optionally, the second network device may send a handover request acknowledge message to the first network device, where the handover request acknowledge message includes the second progress information.

S604, the first network device determines the at least one first packet based on the first progress information and the second progress information.

It should be noted that, for the execution process of S604, reference can be made to the execution process of S503, which will not be repeated here.

S605, the first network device sends the at least one first packet to the second network device.

S606, the second network device sends the at least one first packet to the terminal device.

It should be noted that, for the execution process of S606, reference can be made to the execution process of S403, which will not be repeated here.

S607, the second network device sends indication information to the first network device.

The indication information is used to indicate, to the first network device, not to perform data forwarding.

Optionally, the second network device may send a handover request acknowledge message to the first network device, where the handover request acknowledge message includes the indication information.

S608, the first network device does not perform data forwarding.

Optionally, if the first network device does not perform data forwarding, the first network device may execute S307 in the embodiment of FIG. 3.

In the embodiment shown in FIG. 6, the second network device may determine whether data forwarding is required based on the progress information of sending the first service by the first network device and the second network device. When it is determined that data forwarding is required, the second network device may send the first network device the progress information of sending the first service by the second network device, the first network device may determine the at least one first packet that may be lost during the network handover process based on the progress information of sending the first service by the first network device and the second network device, and send the at least one first packet to the second network device packet, so that after the terminal device is handed over to the second network device, the second network device can send the at least one first packet to the terminal device, so as to reduce packet loss during the network handover process, thereby improving the reliability of network handover.

In the embodiment shown in FIG. 5 or FIG. 6, optionally, when it is determined that data forwarding is required, the at least one first packet may also be determined by the second network device. In a possible implementation, the second network device may send the identifier of the at least one first packet to the first network device, so that the first network device sends the at least one first packet to the second network device based on the identifier of the at least one first packet, and the second network device sends the at least one first packet to the terminal device. In another possible implementation, after the second network device determines to obtain the at least one first packet, if the at least one first packet is buffered in the second network device, the second network device may send the at least one first packet to the terminal device after the terminal device is handed over to the second network device.

On the basis of any one of the above embodiments, the transmission modes of the first network device and the second network device may be RLC AM or RLC UM. When the modes of the first network device and the second network device are different, the first progress information, the second progress information, the determination of whether to perform data forwarding, and the at least one first packet may be different. Description will be made below respectively, which may include at least the following four cases:

A first case: the transmission mode of the first network device is the RLC AM, and the transmission mode of the second network device is the RLC AM;

The first progress information includes at least one of the following: a first identifier, or sending status of a packet having been sent by the first network device, where the first identifier is a maximum identifier of a consecutive packet having been successfully sent by the first network device, and the sending status is sending succeeded or sending failed.

The packet having been successfully sent by the first network device refers to a packet of which a success response has been received by the first network device. That is, after the first network device sends the packet, if a success response corresponding to the packet sent by the terminal device is received, the first network device successfully sends the packet.

For example, it is assumed that the first network device has sent packet 1, packet 2, packet 3, packet 4, and packet 5, and the first network device has received the success response corresponding to the packet 1, the packet 2, and the packet 5, then the packet 3 and the packet 4 are packets that are not successfully sent. In this case, the first progress information may include an identifier of the packet 2, and the first progress information may also include sending status of the above five packets or sending status of the packet 3, the packet 4 and the packet 5.

The second progress information includes: a second identifier, where the second identifier is a maximum identifier of a consecutive packet having been successfully sent by the second network device.

For example, it is assumed that the second network device has sent 13 packets, and the second network device does not receive the success responses corresponding to the packet 11 and the packet 12, and the second network device receives the success responses corresponding to the other 11 packets. That is, the consecutive packets that the second network device has successfully sent are the packet 1- the packet 10, and the second identifier is an identifier of the packet 10.

The first network device or the second network device may determine whether to perform data forwarding in the following manner: determine whether the second identifier is greater than the first identifier; if yes, determine to perform data forwarding; if not, determine not to perform data forwarding.

The at least one first packet includes: a packet having an identifier within a first identifier range and having not been successfully sent by the first network device, where the first identifier range is: a range greater than the first identifier and less than or equal to the second identifier.

The first case will be described below with reference to FIG. 7 by a specific example.

FIG. 7 is a schematic diagram of a type of data transmission provided by an embodiment of the present application. Please refer to FIG. 7, the transmission mode of the first network device is AM, and the transmission mode of the second network device is AM. The first network device sends packets of a (MRB or DRB) first service to cell 1 served by the first network device, and the second network device sends packets of a (MRB or DRB) second service to cell 2 served by the second network device.

It is assumed that the first network device has sent packets 1 to 5 to the terminal device (UE) in the cell 1, and the first network device has received success responses of the packet 1, the packet 2 and the packet 5. That is, the first network device has successfully sent the packet 1, the packet 2 and the packet 5, and the first network device has not successfully sent the packet 3 and the packet 4.

It is assumed that the second network device has sent packets 1 to 13 to the terminal device (UE) in the cell 2, and the first network device has received success responses of the packets 1 to 10 and the packet 13. That is, the first network device has successfully sent the packets 1 to 10 and the packet 13, but the first network device has not successfully sent the packet 11 and the packet 12.

The first progress information may include: an identifier of the packet 2 (SN=2) (the maximum identifier of consecutive packets having been successfully sent by the first network device), sending status of the packet 3 (sending failed), and sending status of the packet 4 (sending failed), status information of the packet 5 (sending succeeded).

The second progress information may include: an identifier of the packet 10 (SN=10) (the maximum identifier of consecutive packets having been successfully sent by the second network device).

Since the maximum identifier (SN=10) of the consecutive packets having been successfully sent by the second network device is greater than the maximum identifier (SN=2) of the consecutive packets having been successfully sent by the first network device, it is determined that data forwarding is required. The first network device determines that the at least one first packet includes: the packet 3 to the packet 4, and the packet 6 to the packet 10, that is, the identifier of the at least one first packet includes: 3, 4, 6, 7, 8, 9, 10.

The first network device can send the packet 3 to the packet 4, and the packet 6 to the packet 10 to the second network device, and after the terminal device is handed over to the second network device, the second network device sends the packet 3 to the packet 4, and the packet 6 to the packet 10 to the terminal device.

In the above process, during the handover of the terminal device from the first network device to the second network device, because the progress of sending the first service by the second network device is faster than the progress of sending the first service by the first network device, some packets may be lost during the network handover process. The first network device determines the at least one first packet that may be lost, and sends the at least one first packet to the second network device, and after the terminal device is handed over to the second network device, the second network device can send the at least one first packet to the terminal device, so as to reduce packet loss during the network handover, thereby improving the reliability of network handover.

A second case: the transmission mode of the first network device is the RLC UM, and the transmission mode of the second network device is the RLC UM;

The first progress information includes: a third identifier, where the third identifier is a maximum identifier of a packet having been sent by the first network device.

For example, it is assumed that the first network device has sent packets 1 to 5, then the third identifier is an identifier of the packet 5.

The second progress information includes: a fourth identifier, where the fourth identifier is a maximum identifier of a packet having been sent by the second network device, or the fourth identifier is a minimum identifier of a packet in a sending buffer of the second network device.

For example, it is assumed that the second network device has sent packet 1 to packet 13, and the packets buffered in the sending buffer are packet 10 to packet 13, then the fourth identifier is an identifier of the packet 13 (the maximum identifier of the packets having been sent by the second network device), or the fourth identifier is an identifier of the packet 10 (the minimum identifier of the packets in the sending buffer of the second network device).

The first network device or the second network device may determine whether to perform data forwarding in the following manner: determine whether the fourth identifier is greater than the third identifier; if yes, determine to perform data forwarding; if not, determine not to perform data forwarding.

The at least one first packet includes: a packet having an identifier within a second identifier range, where the second identifier range is: a range greater than the third identifier and less than the fourth identifier.

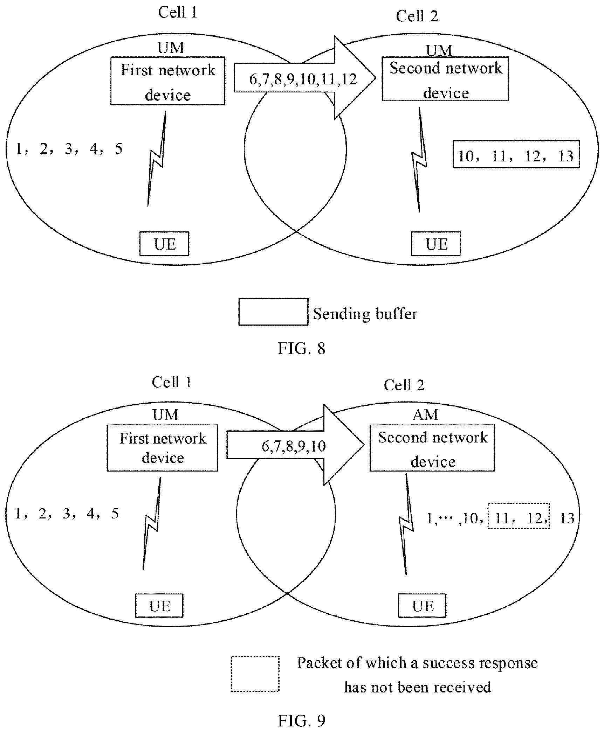

The second case will be described below with reference to FIG. 8 by a specific example.

FIG. 8 is a schematic diagram of another type of data transmission provided by an embodiment of the present application. Please refer to FIG. 8, the transmission mode of the first network device is UM, and the transmission mode of the second network device is UM. The first network device sends packets of a (MRB or DRB) first service to cell 1 served by the first network device, and the second network device sends packets of a (MRB or DRB) second service to cell 2 served by the second network device.

It is assumed that the first network device has sent packet 1 to packet 5 to a terminal device (UE) in cell 1. The second network device has sent packet 1 to packet 13 to a terminal device (UE) in cell 2, and the packet 10 to the 13 are included in the sending buffer of the second network device.

The first progress information may include: an identifier of the packet 5 (SN=5) (the maximum identifier of the packets having been sent by the first network device).

The second progress information may include: an identifier of the packet 13 (SN=13) (the maximum identifier of the packets having been sent by the second network device).

Since the maximum identifier (SN=13) of the packets having been sent by the second network device is greater than the maximum identifier (SN=5) of the packets having been sent by the first network device, it is determined that data forwarding is required, and the first network device determines the at least one first packet includes: the packet 6 to the packet 12.

The first network device can send the packet 6 to the packet 12 to the second network device, and after the terminal device is handed over to the second network device, the second network device sends the packet 6 to the packet 12 to the terminal device.

In the above process, during the handover of the terminal device from the first network device to the second network device, because the progress of sending the first service by the second network device is faster than the progress of sending the first service by the first network device, some packets may be lost during the network handover process. The first network device determines the at least one first packet that may be lost, and sends the at least one first packet to the second network device, and after the terminal device is handed over to the second network device, the second network device can send the at least one first packet to the terminal device, so as to reduce packet loss during the network handover process, thereby improving the reliability of network handover.

A third case: the transmission mode of the first network device is the RLC UM, and the transmission mode of the second network device is the RLC AM;

The first progress information includes: a third identifier, where the third identifier is a maximum identifier of a packet having been sent by the first network device.

In this case, for the first progress information, reference can be made to the description of the first progress information in the second case, which will not be repeated here.

The second progress information includes: where the second identifier is a maximum identifier of a consecutive packet having been successfully sent by the second network device.

In this case, for the second progress information, reference can be made to the description of the second progress information in the first case, which will not be repeated here.

The first network device or the second network device may determine whether to perform the data forwarding in the following manner: determine whether the second identifier is greater than the third identifier; if yes, determine to perform data forwarding; if not, determine not to perform data forwarding.

The at least one first packet includes: a packet having an identifier within a third identifier range, where the third identifier range is: a range greater than the third identifier and less than or equal to the second identifier.

The third case will be described below with reference to FIG. 9 by a specific example.

FIG. 9 is a schematic diagram of still another type of data transmission provided by an embodiment of the present application. Please refer to FIG. 9, the transmission mode of the first network device is UM, and the transmission mode of the second network device is AM. The first network device sends packets of a (MRB or DRB) first service to cell 1 served by the first network device, and the second network device sends packets of a (MRB or DRB) second service to cell 2 served by the second network device.

It is assumed that the first network device has sent packet 1 to packet 5 to a terminal device (UE) in cell 1.

It is assumed that the second network device has sent packet 1 to packet 13 to a terminal device (UE) in the cell 2, and the first network device has received success responses of the packets 1 to 10 and the packet 13. That is, the first network device has successfully sent the packets 1 to 10 and the packet 13, but the first network device has not successfully sent the packet 11 and the packet 12.

The first progress information may include: an identifier of the packet 5 (SN=5) (the maximum identifier of the packets having been sent by the first network device).

The second progress information may include: an identifier of the packet 10 (SN=10) (the maximum identifier of consecutive packets having been successfully sent by the second network device).

Since the maximum identifier (SN=10) of the consecutive packets having been successfully sent by the second network device is greater than the maximum identifier (SN=5) of the packets having been sent by the first network device, it is determined that data forwarding is required. The first network device determines that the at least one first packet includes: the packet 6 to the packet 10, that is, the identifier of the at least one first packet includes: 6, 7, 8, 9, 10.

The first network device can send the packet 6 to the packet 10 to the second network device, and after the terminal device is handed over to the second network device, the second network device sends the packet 6 to the packet 10 to the terminal device.

In the above process, during the handover of the terminal device from the first network device to the second network device, because the progress sending the first service by the second network device is faster than the progress of sending the first service by the first network device, some packets may be lost during the network handover process. The first network device determines the at least one first packet that may be lost, and sends the at least one first packet to the second network device, and after the terminal device is handed over to the second network device, the second network device can send the at least one first packet to the terminal device, so as to reduce packet loss during the network handover process, thereby improving the reliability of network handover.

A fourth case: the transmission mode of the first network device is the RLC AM, and the transmission mode of the second network device is the RLC UM;

The first progress information includes at least one of the following: a first identifier or sending status of a packet having been sent by the first network device, where the first identifier is a maximum identifier of a consecutive packet having been successfully sent by the first network device, and the sending status is sending succeeded or sending failed.

In this case, for the first progress information, reference can be made to the description of the first progress information in the first case, which will not be repeated here.

The second progress information includes: a fourth identifier, where the fourth identifier is a maximum identifier of a packet having been sent by the second network device, or the fourth identifier is a minimum identifier of a packet in a sending buffer of the second network device.

In this case, for the second progress information, reference can be made to the description of the second progress information in the second case, which will not be repeated here.

The first network device or the second network device may determine whether to perform data forwarding in the following manner: determine whether the fourth identifier is greater than the first identifier; if yes, determine to perform data forwarding; if not, determine not to perform data forwarding.

The at least one first packet includes: a packet having an identifier within a fourth identifier range and having not been successfully sent by the first network device, where the fourth identifier range is: a range greater than the first identifier and less than the fourth identifier.

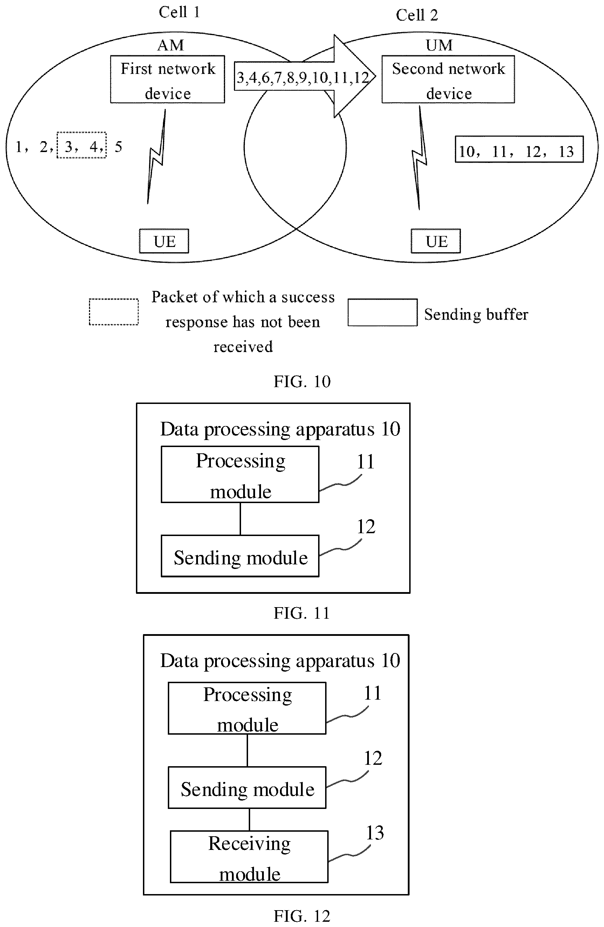

The third case will be described below with reference to FIG. 10 by a specific example.

FIG. 10 is a schematic diagram of yet another type of data transmission provided by an embodiment of the present application. Please refer to FIG. 10, the transmission mode of the first network device is AM, and the transmission mode of the second network device is UM. The first network device sends packets of a (MRB or DRB) first service to cell 1 served by the first network device, and the second network device sends packets of a (MRB or DRB) second service to cell 2 served by the second network device.

It is assumed that the first network device has sent packets 1 to 5 to a terminal device (UE) in the cell 1, and the first network device has received success responses of the packet 1, the packet 2 and the packet 5. That is, the first network device has successfully sent the packet 1, the packet 2 and the packet 5, and the first network device has not successfully sent the packet 3 and the packet 4.

It is assumed that the second network device has sent packet 1 to packet 13 to a terminal device (UE) in cell 2, and the packet 10 to the packet 13 are included in the sending buffer of the second network device.

The first progress information may include: an identifier of the packet 2 (SN=2) (the maximum identifier of consecutive packets having been successfully sent by the first network device), status of the packet 3 (sending failed), and sending status of the packet 4 (sending failed), status information of the packet 5 (sending succeeded).

The second progress information may include: an identifier of the packet 13 (SN=13) (the maximum identifier of the packets having has been sent by the second network device).

Since the maximum identifier of the packets having been sent by the second network device is greater than the maximum identifier of the consecutive packets having been successfully sent by the first network device, it is determined that data forwarding is required. Since packet 4 fails to be sent and the packet 5 fails to be sent, it can be determined that the at least one packet includes: the packet 3- the packet 4, and the packet 6- the packet 12.

The first network device can send the packet 3- the packet 4, and the packet 6- the packet 12 to the second network device, and after the terminal device is handed over to the second network device, the second network device sends the packet 3- the packet 4, and the packet 6- the packet 12 to the terminal device.

In the above process, during the handover of the terminal device from the first network device to the second network device, because the progress of sending the first service by the second network device is faster than the progress of sending the first service by the first network device, some packets may be lost during the network handover process. The first network device determines the at least one first packet that may be lost, and sends the at least one first packet to the second network device, and after the terminal device is handed to the second network device, the second network device can send the at least one first packet to the terminal device, so as to reduce packet loss during the network handover process, thereby improving the reliability of network handover.

FIG. 11 is a schematic structural diagram of a data transmission apparatus provided by an embodiment of the present application. The data processing apparatus 10 can be provided in a first network device. Please refer to FIG. 11, the data processing device 10 may include: a processing module 11 and a sending module 12, where,
the processing module 11 is configured to acquire at least one first packet of a first service, where the at least one first packet is determined based on progress information of sending the first service by a first network device and a second network device, the first network device is a network device accessed by a terminal device before network handover, and the second network device is a network device accessed by the terminal device after the network handover; and
the sending module 12 is configured to send the at least one first packet to the second network device, where the at least one packet is a packet to be sent by the second network device to the terminal device.

The data processing apparatus provided in the embodiment of the present application can be used to implement the technical solutions of the above method embodiments, and the implementation principles and technical effects thereof are similar, which will not be repeated here.

In a possible implementation, the at least one first packet includes:
a packet having not been successfully sent by the first network device but having been successfully sent by the second network device before the first network device sends a handover request message to the second network device.

In a possible implementation, the processing module 11 is specifically configured to:
acquire first progress information of sending the first service by the first network device, and second progress information of sending the first service by the second network device;
determine whether to perform data forwarding based on the first progress information and the second progress information; and
when it is determined to perform data forwarding, acquire the at least one first packet based on the first network device based on the first progress information and the second progress information.

In a possible implementation,

In a possible implementation, a transmission mode of the first network device is a radio link control (RLC) acknowledged mode (AM), and a transmission mode of the second network device is the RLC AM;
the first progress information includes at least one of the following: a first identifier or sending status of a packet having been sent by the first network device, where the first identifier is a maximum identifier of a consecutive packet having been successfully sent by the first network device, and the sending status is sending succeeded or sending failed; and
the second progress information includes: a second identifier, where the second identifier is a maximum identifier of a consecutive packet having been successfully sent by the second network device.

In a possible implementation, the processing module 11 is specifically configured to:
judge whether the second identifier is greater than the first identifier;
if yes, determine to perform data forwarding;
if not, determine not to perform data forwarding.

In a possible implementation, the at least one first packet includes:
a packet having an identifier within a first identifier range and having not been successfully sent by the first network device, where the first identifier range is: a range greater than the first identifier and less than or equal to the second identifier.

In a possible implementation, a transmission mode of the first network device is an RLC unacknowledged mode (UM), and a transmission mode of the second network device is the RLC UM;
the first progress information includes: a third identifier, where the third identifier is a maximum identifier of a packet having been sent by the first network device; and
the second progress information includes: a fourth identifier, where the fourth identifier is a maximum identifier of a packet having been sent by the second network device, or the fourth identifier is a minimum identifier of a packet in a sending buffer of the second network device.

In a possible implementation, the processing module 11 is specifically configured to:
judge whether the fourth identifier is greater than the third identifier;
if yes, determine to perform data forwarding;
if not, determine not to perform data forwarding.

In a possible implementation, the at least one first packet includes:
a packet having an identifier within a second identifier range, where the second identifier range is: a range greater than the third identifier and less than the fourth identifier.

In a possible implementation, a transmission mode of the first network device is an RLC UM, and a transmission mode of the second network device is an RLC AM;
the first progress information includes: a third identifier, where the third identifier is a maximum identifier of a packet having been sent by the first network device; and
the second progress information includes: a second identifier, where the second identifier is a maximum identifier of a consecutive packet having been successfully sent by the second network device.

In a possible implementation, the processing module 11 is specifically configured to:
judge whether the second identifier is greater than the third identifier;
if yes, determine to perform data forwarding;
if not, determine not to perform data forwarding.

In a possible implementation, the at least one first packet includes:
a packet having an identifier within a third identifier range, where the third identifier range is: a range greater than the third identifier and less than or equal to the second identifier.

In a possible implementation, a transmission mode of the first network device is an RLC AM, and a transmission mode of the second network device is an RLC UM;
the first progress information includes at least one of the following: a first identifier or sending status of a packet having been sent by the first network device, where the first identifier is a maximum identifier of a consecutive packet having been successfully sent by the first network device, and the sending status is sending succeeded or sending failed; and
the second progress information includes: a fourth identifier, where the fourth identifier is a maximum identifier of a packet having been sent by the second network device, or the fourth identifier is a minimum identifier of a packet in a sending buffer of the second network device.

In a possible implementation, the processing module 11 is specifically configured to:
judge whether the fourth identifier is greater than the first identifier;
if yes, determine to perform data forwarding;
if not, determine not to perform data forwarding.

In a possible implementation, the at least one first packet includes:
a packet having an identifier within a fourth identifier range and having not been successfully sent by the first network device, where the fourth identifier range is: a range greater than the first identifier and less than the fourth identifier.

FIG. 12 is a schematic structural diagram of another data transmission apparatus provided by an embodiment of the present application. On the basis of the embodiment shown in FIG. 11, please refer to FIG. 12, the data processing apparatus 10 may further include a receiving module 13, where,
the receiving module 13 is configured to receive an identifier of the at least one first packet sent by the second network device; and
the processing module 11 is configured to acquire the at least one first packet based on the identifier of the at least one first packet.

The data processing apparatus provided in the embodiment of the present application can be used to implement the technical solutions of the above method embodiments, and the implementation principles and technical effects thereof are similar, which will not be repeated here.

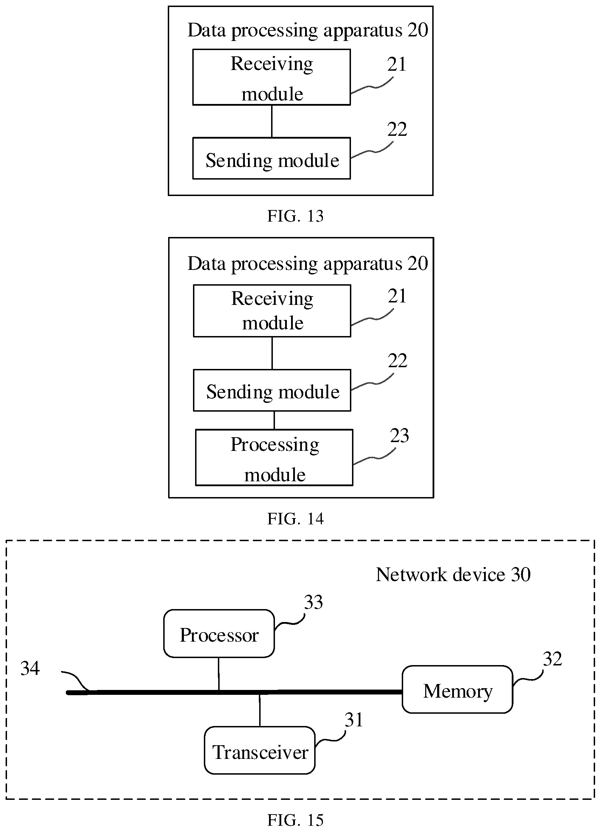

FIG. 13 is a schematic structural diagram of still another data transmission apparatus provided by an embodiment of the present application. The data processing apparatus 20 can be provided in a second network device. Please refer to FIG. 13, the data processing apparatus 20 may include: a receiving module 21 and a sending module 22, where,
the receiving module 21 is configured to receive at least one first packet sent by a first network device, where the at least one first packet is determined based on progress information of sending a first service by the first network device and a second network device, the first network device is a network device accessed by a terminal device before network handover, and the second network device is a network device accessed by the terminal device after the network handover; and
the sending module 22 is configured to send the at least one first packet to the terminal device.

The data transmission apparatus provided in the embodiment of the present application can be used to implement the technical solutions of the above method embodiments, and the implementation principles and technical effects thereof are similar, which will not be repeated here.

In a possible implementation, the first packet includes:
a packet having not been successfully sent by the first network device but having been successfully sent by the second network device before the first network device sends a handover request message to the second network device.

FIG. 14 is a schematic structural diagram of yet another data transmission apparatus provided by an embodiment of the present application. On the basis of the embodiment shown in FIG. 13, please refer to FIG. 14, the data processing device 20 further includes a processing module 23, and the processing module 23 is configured to:
before the receiving module 21 receives the at least one first packet sent by the first network device, acquire first progress information of sending the first service by the first network device, and second progress information of sending the first service by the second network device; and
determine to perform data forwarding based on the first progress information and the second progress information.

In a possible implementation, a transmission mode of the first network device is a radio link control (RLC) acknowledged mode (AM), and a transmission mode of the second network device is the RLC AM;
the first progress information includes at least one of the following: a first identifier or sending status of a packet having been sent by the first network device, where the first identifier is a maximum identifier of a consecutive packet having been successfully sent by the first network device, and the sending status is sending succeeded or sending failed; and
the second progress information includes: a second identifier, where the second identifier is a maximum identifier of a consecutive packet having been successfully sent by the second network device.

In a possible implementation, the processing module 23 is configured to:
judge whether the second identifier is greater than the first identifier;
if yes, determine to perform data forwarding.

In a possible implementation, the at least one first packet includes:
a packet having an identifier within a first identifier range and having not been successfully sent by the first network device, where the first identifier range is: a range greater than the first identifier and less than or equal to the second identifier.

In a possible implementation, a transmission mode of the first network device is an RLC unacknowledged mode (UM), and a transmission mode of the second network device is the RLC UM;
the first progress information includes: a third identifier, where the third identifier is a maximum identifier of a packet having been sent by the first network device; and
the second progress information includes: a fourth identifier, where the fourth identifier is a maximum identifier of a packet having been sent by the second network device, or the fourth identifier is a minimum identifier of a packet in a sending buffer of the second network device.

In a possible implementation, the processing module 23 is specifically configured to:
judge whether the fourth identifier is greater than the third identifier;
if yes, determine to perform data forwarding.

In a possible implementation, the at least one first packet includes:
a packet having an identifier within a second identifier range, where the second identifier range is: a range greater than the third identifier and less than the fourth identifier.

In a possible implementation, a transmission mode of the first network device is an RLC UM, and a transmission mode of the second network device is an RLC AM;
the first progress information includes: a third identifier, where the third identifier is a maximum identifier of a packet having been sent by the first network device; and
the second progress information includes: a second identifier, where the second identifier is a maximum identifier of a consecutive packet having been successfully sent by the second network device.

In a possible implementation, the processing module 23 is specifically configured to:
judge whether the second identifier is greater than the third identifier;
if yes, determine to perform data forwarding.

In a possible implementation, the at least one first packet includes:
a packet having an identifier within a third identifier range, where the third identifier range is: a range greater than the third identifier and less than or equal to the second identifier.

In a possible implementation, a transmission mode of the first network device is an RLC AM, and a transmission mode of the second network device is an RLC UM;
the first progress information includes at least one of the following: a first identifier or sending status of a packet having been sent by the first network device, where the first identifier is a maximum identifier of a consecutive packet having been successfully sent by the first network device, and the sending status is sending succeeded or sending failed; and
the second progress information includes: a fourth identifier, where the fourth identifier is a maximum identifier of a packet having been sent by the second network device, or the fourth identifier is a minimum identifier of a packet in a sending buffer of the second network device.

In a possible implementation, the processing module 23 is specifically configured to:
judge whether the fourth identifier is greater than the first identifier;
if yes, determine to perform data forwarding.

In a possible implementation, the at least one first packet includes:
a packet having an identifier within a fourth identifier range and having not been successfully sent by the first network device, where the fourth identifier range is: a range greater than the first identifier and less than the fourth identifier.

In a possible implementation, the second network device is a multicast broadcast radio bearer (MRB); the sending module is specifically configured to:
send the at least one first packet to the terminal device through a unicast radio bearer (DRB) corresponding to the MRB; or,
send the at least one first packet to the terminal device through a temporary transmission resource of the MRB.

The data transmission apparatus provided in the embodiment of the present application can be used to implement the technical solutions of the above method embodiments, and the implementation principles and technical effects thereof are similar, which will not be repeated here.

FIG. 15 is a schematic structural diagram of a network device provided by an embodiment of the present application. Please refer to FIG. 15, the network device 30 may include: a transceiver 31, a memory 32, and a processor 33. The transceiver 31 may include: a transmitter and/or a receiver. The transmitter may also be called a sender, a transmitting machine, a sending port, or a sending interface, or similar descriptions, and the receiver may also be called a receiver, a receiving machine, a receiving port, or a receiving interface, or similar descriptions. Illustratively, the transceiver 31, the memory 32, and the processor 33 are connected to each other through a bus 34.

The memory 32 is configured to store program instructions;
the processor 33 is configured to execute the program instructions stored in the memory, to cause the network device 30 to execute any data processing method described above.

The transceiver 31 is configured to perform the transceiver function of the network device 30 in the above data processing method.

An embodiment of the present application provides a computer-readable storage medium, where the computer-readable storage medium has a computer-executable instruction stored thereon, and the computer-executable instruction, when executed by a processor, is used to implement the above data processing method.

An embodiment of the present application may further provide a computer program product, where the computer program product may be executed by a processor, and when the computer program product is executed, any data processing method performed by the network device shown above may be implemented.

The network device, the computer-readable storage medium, and the computer program product in the embodiments of the present application can execute the data processing method described above, and for the specific implementation process and beneficial effects thereof, reference can be made to the above, which will not be repeated here.

All or part of the steps for implementing the above method embodiments can be completed by a program instructing related hardware. The aforementioned program can be stored in a readable memory. When the program is executed, steps including the above-mentioned method embodiments are implemented. The aforementioned memory (storage medium) includes: a read-only memory (English: read-only memory, abbreviation: ROM), a RAM, a flash memory, a hard disk, a solid state disk, a magnetic tape (English: magnetic tape), a floppy disk (English: floppy disk), an optical disc (English: optical disc) and any combination thereof.

The embodiments of the present application are described with reference to flowcharts and/or block diagrams of methods, devices (systems), and computer program products according to the embodiments of the present application. It should be understood that each procedure and/or block in the flowcharts and/or block diagrams, and combinations of procedures and/or blocks in the flowcharts and/or block diagrams can be implemented by computer program instructions. These computer program instructions may be provided to a processing unit of a general-purpose computer, a specialized computer, an embedded processor, or other programmable data processing device to produce a machine, such that an apparatus for implementing a function specified in one or more processes of the flowchart and/or one or more blocks of the block diagram may be produced via the instructions executed by the processing unit of the computer or other programmable data processing device.

These computer program instructions may also be stored in a computer-readable memory capable of directing a computer or other programmable data processors to operate in a specific manner, such that the instructions stored in the computer-readable memory produce a manufacturing product including an instruction apparatus, where the instruction apparatus realizes the function specified in one or more processes of the flow chart and/or one or more blocks of the block diagram.

These computer program instructions may also be loaded onto a computer or other programmable data processing device, such that a series of operational steps are performed on the computer or other programmable device to produce computer-implemented processing. Therefore, the instructions executed on the computer or other programmable device provide steps for implementing the functions specified in one or more processes of the flowchart and/or one or more blocks of the block diagram.

Obviously, those skilled in the art can make various modifications and variations of the embodiments of the present application without departing from the spirit and scope of the present application. In this way, if these modifications and variations of the embodiments of the present application fall within the scope of the claims of the present application and equivalent technologies thereof, the present application is also intended to include these modifications and variations.

In this application, the term "include" and its variants may refer to nonlimiting inclusion, and the term "or" and its variants may refer to "and/or". The terms "first", "second", etc. in the present application are used to distinguish similar objects, and not necessarily used to describe a particular order or sequence. In the present application, "multiple" refers to two or more than two. The term "and/or" describes an association relationship of associated objects, and represents that there may be three relationships. For example, A and/or B may represent three situations: presence of A only, presence of both A and B, and presence of B only. The character "/" generally represents an "or" relationship between contextual objects.

## Claims

1. A data transmission method, comprising:
acquiring, by a first network device, at least one first packet of a first service, wherein the at least one first packet is determined based on progress information of sending the first service by the first network device and a second network device, the first network device is a network device accessed by a terminal device before network handover, and the second network device is a network device accessed by the terminal device after the network handover; and
sending, by the first network device, the at least one first packet to the second network device, wherein the at least one packet is a packet to be sent by the second network device to the terminal device.

2. The method according to claim 1, wherein the at least one first packet comprises:
a packet having not been successfully sent by the first network device but having been successfully sent by the second network device before the first network device sends a handover request message to the second network device.

3. The method according to claim 1 or 2, wherein the acquiring, by the first network device, the at least one first packet comprises:
acquiring, by a first network device, first progress information of sending the first service by the first network device, and second progress information of sending the first service by the second network device;
determining, by the first network device, based on the first progress information and the second progress information, whether to perform data forwarding; and
when the first network device determines to perform data forwarding, acquiring, by the first network device, the at least one first packet based on the first network device based on the first progress information and the second progress information.

4. The method according to claim 3, wherein a transmission mode of the first network device is a radio link control RLC acknowledged mode AM, and a transmission mode of the second network device is the RLC AM;
the first progress information comprises at least one of the following: a first identifier or sending status of a packet having been sent by the first network device, wherein the first identifier is a maximum identifier of a consecutive packet having been successfully sent by the first network device, and the sending status is sending succeeded or sending failed; and
the second progress information comprises: a second identifier, wherein the second identifier is a maximum identifier of a consecutive packet having been successfully sent by the second network device.

5. The method according to claim 4, wherein the determining, by the first network device, based on the first progress information and the second progress information, whether to perform data forwarding comprises:
judging, by the first network device, whether the second identifier is greater than the first identifier;
if yes, determining, by the first network device, to perform data forwarding;
if not, determining, by the first network device, not to perform data forwarding.

6. The method according to claim 4 or 5, wherein the at least one first packet comprises:
a packet having an identifier within a first identifier range and having not been successfully sent by the first network device, wherein the first identifier range is: a range greater than the first identifier and less than or equal to the second identifier.

7. The method according to claim 3, wherein a transmission mode of the first network device is an RLC unacknowledged mode UM, and a transmission mode of the second network device is the RLC UM;
the first progress information comprises: a third identifier, wherein the third identifier is a maximum identifier of a packet having been sent by the first network device;
the second progress information comprises: a fourth identifier, wherein the fourth identifier is a maximum identifier of a packet having been sent by the second network device, or the fourth identifier is a minimum identifier of a packet in a sending buffer of the second network device.

8. The method according to claim 7, wherein the determining, by the first network device, based on the first progress information and the second progress information, whether to perform data forwarding comprises:
judging, by the first network device, whether the fourth identifier is greater than the third identifier;
if yes, determining, by the first network device, to perform data forwarding;
if not, determining, by the first network device, not to perform data forwarding.

9. The method according to claim 7 or 8, wherein the at least one first packet comprises:
a packet having an identifier within a second identifier range, wherein the second identifier range is: a range greater than the third identifier and less than the fourth identifier.

10. The method according to claim 3, wherein a transmission mode of the first network device is an RLC UM, and a transmission mode of the second network device is an RLC AM;
the first progress information comprises: a third identifier, wherein the third identifier is a maximum identifier of a packet having been sent by the first network device; and
the second progress information comprises: a second identifier, wherein the second identifier is a maximum identifier of a consecutive packet having been successfully sent by the second network device.

11. The method according to claim 10, wherein the determining, by the first network device, based on the first progress information and the second progress information, whether to perform data forwarding comprises:
judging, by the first network device, whether the second identifier is greater than the third identifier;
if yes, determining, by the first network device, to perform data forwarding;
if not, determining, by the first network device, not to perform data forwarding.

12. The method according to claim 11, wherein the at least one first packet comprises:
a packet having an identifier within a third identifier range, wherein the third identifier range is: a range greater than the third identifier and less than or equal to the second identifier.

13. The method according to claim 3, wherein a transmission mode of the first network device is an RLC AM, and a transmission mode of the second network device is an RLC UM;
the first progress information comprises at least one of the following: a first identifier, or sending status of a packet having been sent by the first network device, wherein the first identifier is a maximum identifier of a consecutive packet having been successfully sent by the first network device, and the sending status is sending succeeded or sending failed; and
the second progress information comprises: a fourth identifier, wherein the fourth identifier is a maximum identifier of a packet having been sent by the second network device, or the fourth identifier is a minimum identifier of a packet in a sending buffer of the second network device.

14. The method according to claim 13, wherein the determining, by the first network device, based on the first progress information and the second progress information, whether to perform data forwarding comprises:
judging, by the first network device, whether the fourth identifier is greater than the first identifier;
if yes, determining, by the first network device, to perform data forwarding;
if not, determining, by the first network device, not to perform data forwarding.

15. The method according to claim 14, wherein the at least one first packet comprises:
a packet having an identifier within a fourth identifier range and having not been successfully sent by the first network device, wherein the fourth identifier range is: a range greater than the first identifier and less than the fourth identifier.

16. The method according to claim 1 or 2, wherein the acquiring, by the first network device, the at least one first packet comprises:
receiving, by the first network device, an identifier of the at least one first packet sent by the second network device; and
acquiring, by the first network device, the at least one first packet based on the identifier of the at least one first packet.

17. A data transmission method, comprising:
receiving, by a second network device, at least one first packet sent by a first network device, wherein the at least one first packet is determined based on progress information of sending a first service by the first network device and the second network device, the first network device is a network device accessed by a terminal device before network handover, and the second network device is a network device accessed by the terminal device after the network handover; and
sending, by the second network device, the at least one first packet to the terminal device.

18. The method according to claim 17, wherein the first packet comprises:
a packet having not been successfully sent by the first network device but having been successfully sent by the second network device before the first network device sends a handover request message to the second network device.

19. The method according to claim 17 or 18, before the receiving, by the second network device, the at least one first packet sent by the first network device, further comprising:
acquiring, by the second network device, first progress information of sending the first service by the first network device, and second progress information of sending the first service by the second network device; and
determining, by the second network device, based on the first progress information and the second progress information, to perform data forwarding.

20. The method according to claim 19, wherein a transmission mode of the first network device is a radio link control RLC acknowledged mode AM, and a transmission mode of the second network device is the RLC AM;
the first progress information comprises at least one of the following: a first identifier, or sending status of a packet having been sent by the first network device, wherein the first identifier is a maximum identifier of a consecutive packet having been successfully sent by the first network device, and the sending status is sending succeeded or sending failed; and
the second progress information comprises: a second identifier, wherein the second identifier is a maximum identifier of a consecutive packet having been successfully sent by the second network device.

21. The method according to claim 20, wherein the determining, by the second network device, based on the first progress information and the second progress information, to perform data forwarding comprises:
judging, by the second network device, whether the second identifier is greater than the first identifier;
if yes, determining, by the second network device, to perform data forwarding.

22. The method according to claim 20 or 21, wherein the at least one first packet comprises:
a packet having an identifier within a first identifier range and having not been successfully sent by the first network device, wherein the first identifier range is: a range greater than the first identifier and less than or equal to the second identifier.

23. The method according to claim 19, wherein a transmission mode of the first network device is an RLC unacknowledged mode UM, and a transmission mode of the second network device is the RLC UM;
the first progress information comprises: a third identifier, wherein the third identifier is a maximum identifier of a packet having been sent by the first network device; and
the second progress information comprises: a fourth identifier, wherein the fourth identifier is a maximum identifier of a packet having been sent by the second network device, or the fourth identifier is a minimum identifier of a packet in a sending buffer of the second network device.

24. The method according to claim 23, wherein the determining, by the second network device, based on the first progress information and the second progress information, to perform data forwarding comprises:
judging, by the second network device, whether the fourth identifier is greater than the third identifier;
if yes, determining, by the second network device, to perform data forwarding.

25. The method according to claim 23 or 24, wherein the at least one first packet comprises:
a packet having an identifier within a second identifier range, wherein the second identifier range is: a range greater than the third identifier and less than the fourth identifier.

26. The method according to claim 19, wherein a transmission mode of the first network device is an RLC UM, and a transmission mode of the second network device is an RLC AM;
the first progress information comprises: a third identifier, wherein the third identifier is a maximum identifier of a packet having been sent by the first network device; and
the second progress information comprises: a second identifier, wherein the second identifier is a maximum identifier of a consecutive packet having been successfully sent by the second network device.

27. The method according to claim 26, wherein the determining, by the second network device, based on the first progress information and the second progress information, to perform data forwarding comprises:
judging, by the second network device, whether the second identifier is greater than the third identifier;
if yes, determining, by the second network device, to perform data forwarding.

28. The method according to claim 26 or 27, wherein the at least one first packet comprises:
a packet having an identifier within a third identifier range, wherein the third identifier range is: a range greater than the third identifier and less than or equal to the second identifier.

29. The method according to claim 19, wherein a transmission mode of the first network device is an RLC AM, and a transmission mode of the second network device is an RLC UM;
the first progress information comprises at least one of the following: a first identifier, or sending status of a packet having been sent by the first network device, wherein the first identifier is a maximum identifier of a consecutive packet having been successfully sent by the first network device, and the sending status is sending succeeded or sending failed; and
the second progress information comprises: a fourth identifier, wherein the fourth identifier is a maximum identifier of a packet having been sent by the second network device, or the fourth identifier is a minimum identifier of a packet in a sending buffer of the second network device.

30. The method according to claim 29, wherein the determining, by the second network device, based on the first progress information and the second progress information, to perform data forwarding comprises:
judging, by the second network device, whether the fourth identifier is greater than the first identifier;
if yes, determining, by the second network device, to perform data forwarding.

31. The method according to claim 29 or 30, wherein the at least one first packet comprises:
a packet having an identifier within a fourth identifier range and having not been successfully sent by the first network device, wherein the fourth identifier range is: a range greater than the first identifier and less than the fourth identifier.

32. The method according to any one of claims 17 to 31, wherein the second network device is a multicast broadcast radio bearer MRB; the sending, by the second network device, the at least one first packet to the terminal device comprises:
sending, by the second network device, the at least one first packet to the terminal device through a unicast radio bearer DRB corresponding to the MRB; or,
sending, by the second network device, the at least one first packet to the terminal device through a temporary transmission resource of the MRB.

33. A data transmission apparatus, comprising: a processing module and a sending module, wherein,
the processing module is configured to acquire at least one first packet of a first service, wherein the at least one first packet is determined based on progress information of sending the first service by a first network device and a second network device, the first network device is a network device accessed by a terminal device before network handover, and the second network device is a network device accessed by the terminal device after the network handover; and
the sending module is configured to send the at least one first packet to the second network device, wherein the at least one packet is a packet to be sent by the second network device to the terminal device.

34. A data transmission apparatus, comprising: a receiving module and a sending module, wherein,
the receiving module is configured to receive at least one first packet sent by a first network device, wherein the at least one first packet is determined based on progress information of sending a first service by the first network device and a second network device, the first network device is a network device accessed by a terminal device before network handover, and the second network device is a network device accessed by the terminal device after the network handover; and
the sending module is configured to send the at least one first packet to the terminal device.

35. A network device, comprising: a transceiver, a processor, and a memory;
wherein the memory stores a computer-executable instruction; and
the processor executes the computer-executable instruction stored in the memory, to cause the processor to execute the data processing method according to any one of claims 1 to 32.

36. A computer-readable storage medium, wherein the computer-readable storage medium has a computer-executable instruction stored thereon, and the computer-executable instruction, when being executed by a processor, is used to implement the data processing method according to any one of claims 1 to 32.

37. A computer program product, comprising a computer program that, when executed by a processor, implements the data processing method according to any one of claims 1 to 32.
